# EUROPEAN PATENT APPLICATION

(11) **EP 4 637 122 A1**
(43) Date of publication of application: **22.10.2025**
(21) Application number: 25165555.1
(22) Date of filing: 24.03.2025
(51) Int. Cl.: H04L 69/40, H04W 8/22, H04W 24/04, H04L 65/1023, H04L 65/1033, H04L 67/1034, H04L 65/80

(54) **METHOD AND SYSTEM FOR MAINTAINING DATA TRANSMISSION CONTINUITY**

(30) Priority: 15.04.2024 US 202463633863 P; 22.11.2024 CN 202411679888
(71) Applicant: Moxa Inc., 242032 New Taipei City (TW)
(72) Inventor: LIAO, Kun-Lung, 242032 New Taipei City (TW); HUANG, Chien-Hao, 242032 New Taipei City (TW)
(74) Representative: Becker Kurig & Partner Patentanwälte mbB

(57) **Abstract**

A method and a system (600) for maintaining data transmission continuity are provided. The method includes: detecting, by first customer premise equipment (11), a first wireless communication state of the first customer premise equipment, in which the first customer premise equipment serves an application device (199); and in response to determining that the first wireless communication state is abnormal, executing, by the first customer premise equipment, at least one of the following operations: guiding first data from the application device to a first backup communication device (31); and guiding second data from the first backup communication device to the application device.

## Description

### BACKGROUND

### Technical Field

The disclosure relates to a communication mechanism, and particularly relates to a method and a system for maintaining data transmission continuity.

### Related Art

In the current technology, Customer Premise Equipment (CPE) refers to terminal equipment installed at the location of the user or customer, typically provided or managed by telecommunications companies, Internet Service Providers (ISPs), or cable television companies.

In some applications, the CPE may be used as a communication medium for the application devices served. In these applications, the CPE may receive data from the served application devices and transmit the received data externally to corresponding communication entities (for example, base stations). Additionally, when the CPE receives data corresponding to the application devices from the communication entities, the CPE may forward the received data to the application devices.

However, when the communication state between the CPE and the communication entity becomes abnormal for certain reasons (such as disasters and failures), the CPE may be unable to normally transmit and receive data associated with the application devices, which interrupts the data transmission of the application devices.

### SUMMARY

The disclosure provides a method and a system for maintaining data transmission continuity.

An embodiment of the disclosure provides a method for maintaining data transmission continuity, including: detecting, by first customer premise equipment, a first wireless communication state of the first customer premise equipment, in which the first customer premise equipment serves an application device; and in response to determining that the first wireless communication state is abnormal, executing, by the first customer premise equipment, at least one of the following operations: guiding first data from the application device to a first backup communication device; and guiding second data from the first backup communication device to the application device.

An embodiment of the disclosure provides a system for maintaining data transmission continuity, including first customer premise equipment. The first customer premise equipment is configured to execute: detecting a first wireless communication state of the first customer premise equipment, in which the first customer premise equipment serves an application device; and in response to determining that the first wireless communication state is abnormal, executing at least one of the following operations: guiding first data from the application device to a first backup communication device; and guiding second data from the first backup communication device to the application device.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic diagram illustrating a CPE operation mechanism according to an embodiment of the disclosure.
FIG. 2 is a flowchart illustrating the method for maintaining data transmission continuity according to an embodiment of the disclosure.
FIG. 3 is an application scenario diagram according to an embodiment of the disclosure.
FIG. 4A is a flowchart illustrating detection of the first wireless communication state according to an embodiment of the disclosure.
FIG. **4B** is a flowchart illustrating detection of the first wireless communication state according to another embodiment of the disclosure.
FIG. 5 is a flowchart illustrating switch of the communication interface according to an embodiment of the disclosure.
FIG. 6 is an application scenario diagram according to an embodiment of the disclosure.
FIG. 7 is an application scenario diagram according to an embodiment of the disclosure.

### DETAILED DESCRIPTION OF DISCLOSED EMBODIMENTS

Exemplary embodiments of the disclosure will now be described in detail, with examples of the exemplary embodiments illustrated in the accompanying drawings. Wherever possible, the same reference numerals are used in the drawings and description to represent the same or similar parts.

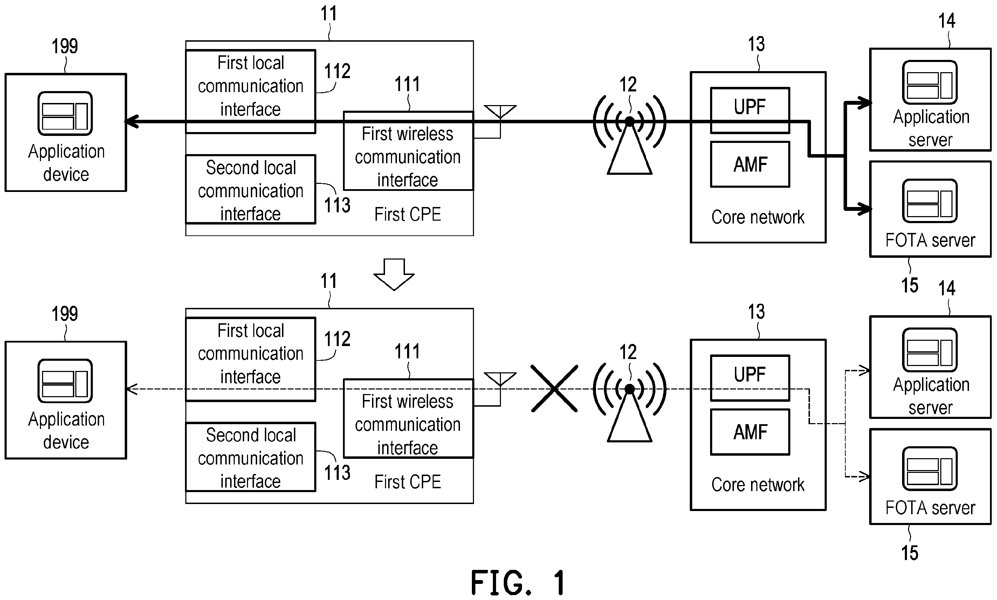

Referring to FIG. 1, FIG. 1 is a schematic diagram illustrating a CPE operation mechanism according to an embodiment of the disclosure.

In FIG. 1, a first CPE 11 may include a first wireless communication interface 111, a first local communication interface 112, and a second local communication interface 113, wherein the first local communication interface 112 may, for example, be connected to an application device 199 served by the first CPE 11. In a different embodiment, the application device 199 may be various types of devices, such as various network devices, telecommunications and voice devices, media devices, security devices, smart home appliances, and enterprise-level devices, but is not limited thereto.

In an embodiment, the first wireless communication interface 111 may, for example, exchange data with a corresponding communication entity based on a corresponding wireless communication protocol. In FIG. 1, the first wireless communication interface 111 may, for example, communicate with a corresponding base station 12 (for example, gNB) based on a 5G communication protocol to exchange data related to the application device 199. Additionally, the base station 12 may further exchange data related to the application device 199 with an application server 14 and a Firmware Over-The-Air (FOTA) server 15 corresponding to the application device 199 through a core network 13.

In a different embodiment, the first wireless communication interface 111 may be, for example, a wide area network (WAN) interface. Additionally, the first local communication interface 112 and the second local communication interface 113 may respectively be local area network (LAN) interfaces (for example, Ethernet ports/interfaces), but are not limited thereto.

In an embodiment, the core network 13 may be, for example, a 5G core network including a User Plane Function (UPF) and an Access and Mobility Management Function (AMF), but is not limited thereto.

In FIG. 1, in the case where the first wireless communication interface 111 is unable to communicate normally with the base station 12 due to reasons such as disasters, the application device 199 may become unable to exchange data normally with the corresponding application server 14 and FOTA server 15, which interrupts the data transmission continuity of the application device 199.

The disclosure provides a method for maintaining data transmission continuity, as specifically described below.

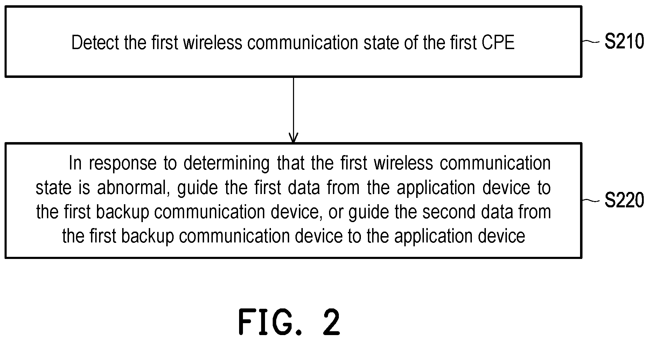

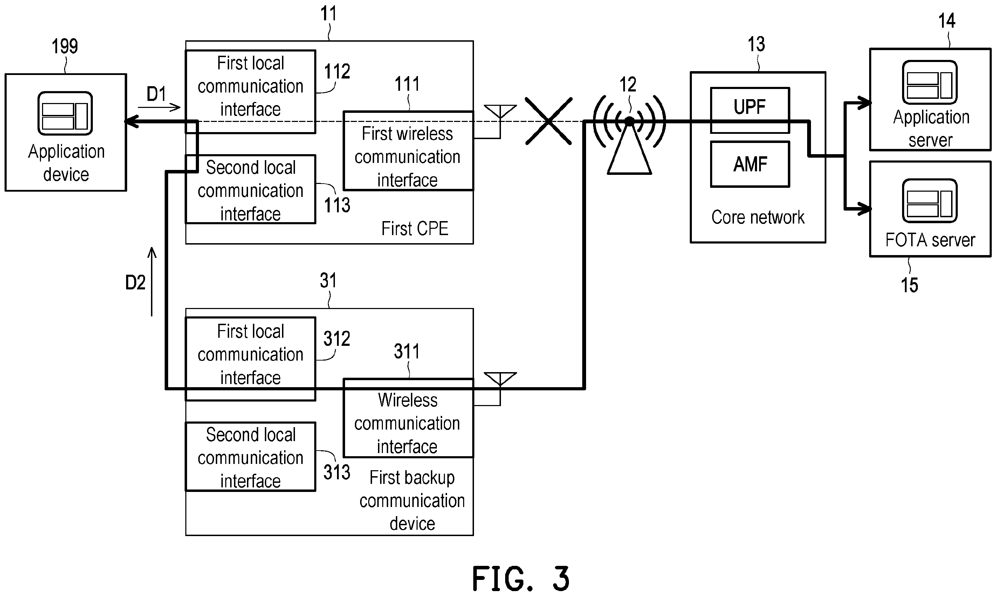

Referring to FIG. 2, FIG. 2 is a flowchart illustrating the method for maintaining data transmission continuity according to an embodiment of the disclosure. Furthermore, to make the concept of FIG. 2 easier to understand, the following description also refers to FIG. 3 which is an application scenario diagram according to an embodiment of the disclosure.

In step S210, the first CPE 11 detects the first wireless communication state of the first CPE 11. In an embodiment, the first wireless communication state may, for example, indicate the communication state between the first CPE 11 and an external communication entity (for example, base station 12), but the disclosure is not limited thereto.

In a different embodiment, the first CPE 11 may determine the first wireless communication state based on the communication protocol type (for example, 4G and/or 5G communication protocol) used between the first CPE 11 and the external communication entity.

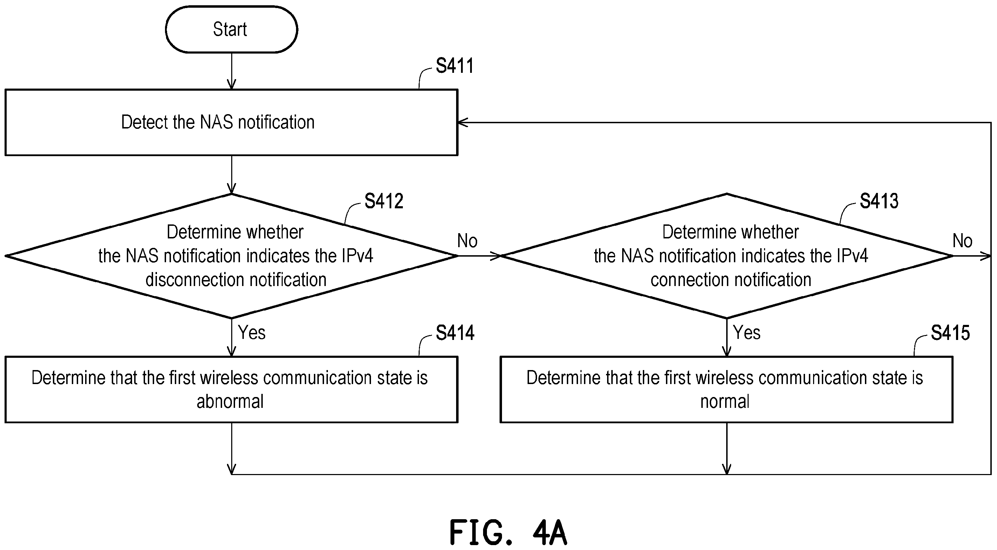

Referring to FIG. 4A, FIG. 4A is a flowchart illustrating detection of the first wireless communication state according to an embodiment of the disclosure. First, in step S411, the first CPE 11 may detect a non-access stratum (NAS) notification, wherein the NAS notification may originate from the base station 12, but the disclosure is not limited thereto.

In step S412, the first CPE 11 may determine whether the NAS notification indicates an IPv4 disconnection notification. If so, it means that the first CPE 11 is unable to communicate normally with the corresponding communication entity (for example, base station 12). Therefore, the first CPE 11 may accordingly execute step S414 to determine that the first wireless communication state is abnormal.

On the other hand, in response to the first CPE 11 determining in step S412 that the NAS notification does not indicate the IPv4 disconnection notification, the first CPE 11 may continue to execute step S413 to determine whether the NAS notification indicates an IPv4 connection notification. If so, it means that the first CPE 11 is able to communicate normally with the corresponding communication entity (for example, base station 12). Therefore, the first CPE 11 may accordingly execute step S415 to determine that the first wireless communication state is normal.

On the other hand, in response to the first CPE 11 determining in step S413 that the NAS notification does not indicate the IPv4 connection notification, the first CPE 11 may return to execute step S411 to continuously detect a (new) NAS notification, but the disclosure is not limited thereto.

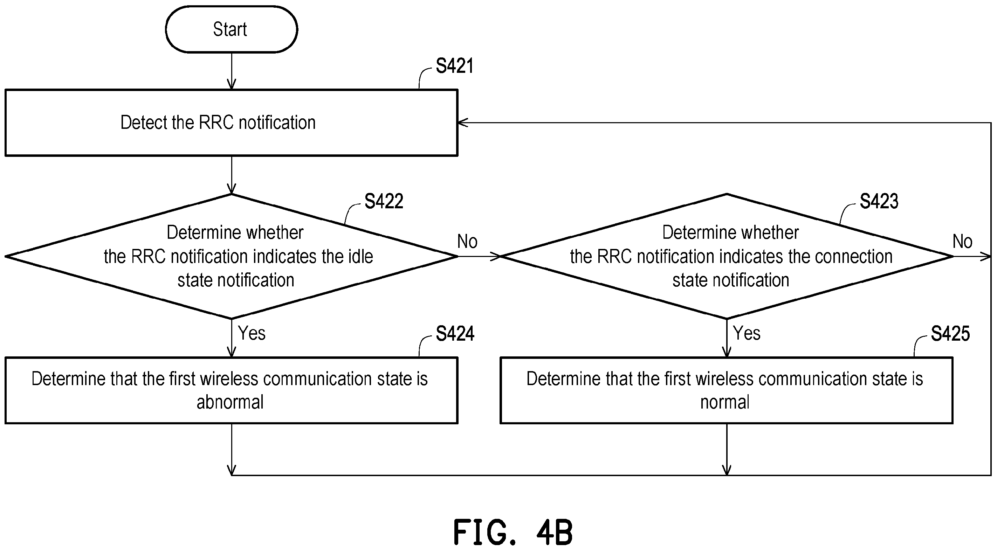

Referring to FIG. 4B, FIG. 4B is a flowchart illustrating detection of the first wireless communication state according to another embodiment of the disclosure. First, in step S421, the first CPE 11 may detect a radio resource control (RRC) notification, wherein the RRC notification may originate from the base station 12, but the disclosure is not limited thereto.

In step S422, the first CPE 11 may determine whether the RRC notification indicates an idle state notification (for example, indicating that the first CPE 11 enters an RRC_idle state). If so, it means that the first CPE 11 is unable to communicate normally with the corresponding communication entity (for example, base station 12). Therefore, the first CPE 11 may accordingly execute step S424 to determine that the first wireless communication state is abnormal.

On the other hand, in response to the first CPE 11 determining in step S422 that the RRC notification does not indicate the idle state notification, the first CPE 11 may continue to execute step S423 to determine whether the RRC notification indicates a connection state notification. If so, it means that the first CPE 11 is able to communicate normally with the corresponding communication entity (for example, base station 12). Therefore, the first CPE 11 may accordingly execute step S425 to determine that the first wireless communication state is normal.

On the other hand, in response to the first CPE 11 determining in step S423 that the RRC notification does not indicate the connection state notification, the first CPE 11 may return to execute step S421 to continuously detect a (new) RRC notification, but the disclosure is not limited thereto.

In an embodiment, in response to determining that the first wireless communication state is normal, the first CPE 11 may transmit and receive data associated with the application device 199 through the first wireless communication interface 111, wherein the first wireless communication interface 111 is connected to the first local communication interface 112. In this case, it may be understood that the first CPE 11 operates in the manner shown in the upper half of FIG. 1, thereby enabling the application device 199 to normally exchange data with the corresponding application server 14 and FOTA server 15, but the disclosure is not limited thereto.

On the other hand, in step S220, in response to determining that the first wireless communication state is abnormal, the first CPE 11 may guide the first data D1 from the application device 199 to a first backup communication device 31, or guide the second data D2 from the first backup communication device 31 to the application device 199.

In an embodiment of the disclosure, the first CPE 11 may, without handshaking with the first backup communication device 31, directly guide the first data D1 from the application device 199 to the first backup communication device 31, or receive the second data D2 from the first backup communication device 31, but the disclosure is not limited thereto.

From another perspective, the first CPE 11 and the first backup communication device 31 may exchange the first data D1 and/or the second data D2 without the need to coordinate the communication parameters or confirm the connection state through handshaking, but the disclosure is not limited thereto.

In FIG. 3, the first backup communication device 31 may include a wireless communication interface 311, a first local communication interface 312, and a second local communication interface 313, wherein the first local communication interface 312 may, for example, be connected to the second local communication interface 113 of the first CPE 11.

In an embodiment, in the case where the first CPE 11 determines that the first wireless communication state is abnormal, the first CPE 11 may switch the connection of the first local communication interface 112 originally connected to the first wireless communication interface 111 to the second local communication interface 113. In this case, in response to the first CPE 11 receiving the first data D1 from the application device 199, the first data D1 may be sequentially forwarded through the first local communication interface 112 and the second local communication interface 113 to the first local communication interface 312 of the first backup communication device 31.

In FIG. 3, the first backup communication device 31 is, for example, a second CPE, and the second wireless communication state of the second CPE may be normal. In an embodiment, the second wireless communication state may, for example, indicate the communication state between the first backup communication device and the external communication entity (for example, base station 12), but the disclosure is not limited thereto.

Therefore, when the second wireless communication state is normal, it means that the first backup communication device 31 is able to communicate normally with the external communication entity that the first CPE 11 originally communicates with. In the scenario of FIG. 3, this concept may be understood as that the wireless communication interface 311 of the first backup communication device 31 is able to exchange data normally with the base station 12, but the disclosure is not limited thereto.

In FIG. 3, the first local communication interface 312 of the first backup communication device 31 may be connected to the wireless communication interface 311. In this case, the wireless communication interface 311 may be used to transmit and receive data associated with the application device 199. For example, after receiving the first data D1 of the application device 199 from the first local communication interface 312, the wireless communication interface 311 may transmit the first data D1 to the base station 12 through the corresponding wireless communication protocol. On the other hand, when receiving the second data D2 associated with the application device 199 from the base station 12, the wireless communication interface 311 may sequentially forward the second data D2 to the application device 199 through the first local communication interface 312, the second local communication interface 113, and the first local communication interface 112.

From the above, it can be known that, in the case where the first CPE 11 is unable to exchange data normally with the corresponding external communication entity (for example, base station 12), the method according to the embodiment of the disclosure may maintain data transmission continuity by switching the connection of the first local communication interface 112 to the second local communication interface 113, thereby enabling data related to the application device 199 to be exchanged with the external communication entity through the first backup communication device 31.

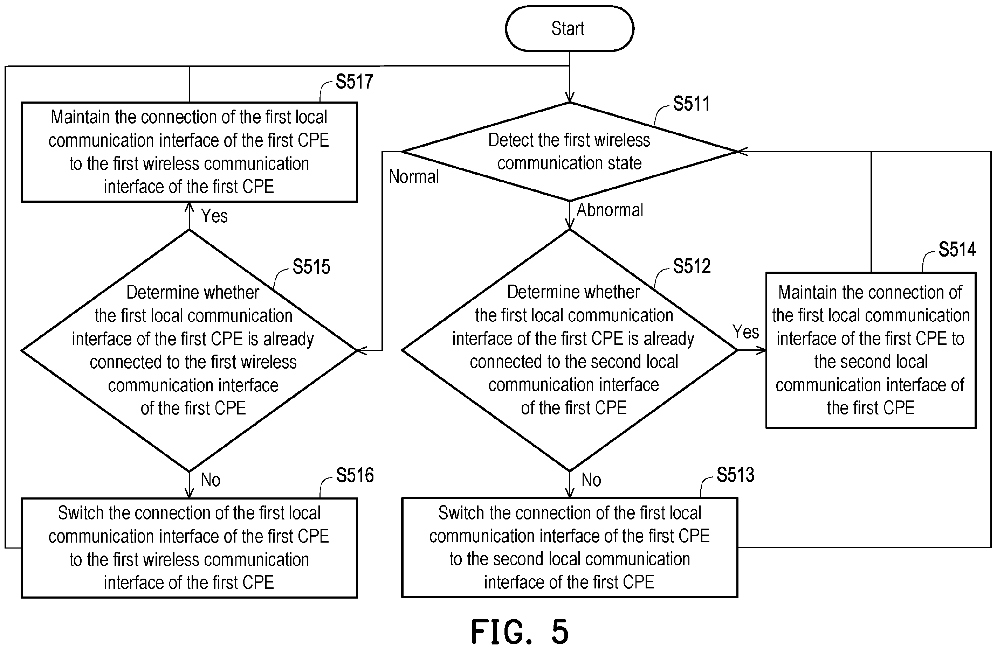

Referring to FIG. 5, FIG. 5 is a flowchart illustrating switch of the communication interface according to an embodiment of the disclosure.

In step S511, the first CPE 11 may detect the first wireless communication state. If the first wireless communication state is abnormal, it means that the first CPE 11 does not have the ability to exchange data with the external communication entity through the first wireless communication interface 111 thereof. In this case, the first CPE 11 may continue to execute step S512.

In step S512, the first CPE 11 may determine whether the first local communication interface 112 of the first CPE 11 is already connected to the second local communication interface 113 of the first CPE 11. If not, the first CPE 11 may continue to execute step S513 to switch the connection of the first local communication interface 112 of the first CPE 11 to the second local communication interface 113 of the first CPE 11.

On the other hand, if the first CPE 11 determines in step S512 that the first local communication interface 112 of the first CPE 11 is already connected to the second local communication interface 113 of the first CPE 11, it means that the first CPE 11 has switched the connection of the first local communication interface 112 to the second local communication interface 113 in response to the abnormal first wireless communication state. Therefore, the first CPE 11 may accordingly execute step S514 to maintain the connection of the first local communication interface 112 of the first CPE 11 to the second local communication interface 113 of the first CPE 11.

After step S513 and step S514, the first data D1 and/or the second data D2 of the application device 199 may be exchanged with the base station 12 through the first backup communication device 31, but the disclosure is not limited thereto. In this case, the first CPE 11 may return to step S511 to detect the first wireless communication state again.

In an embodiment, if the first CPE 11 determines in step S511 that the first wireless communication state is normal (or has changed from abnormal to normal), it means that the first CPE 11 now has the ability to exchange data with the external communication entity through the first wireless communication interface 111 thereof. In this case, the first CPE 11 may continue to execute step S515.

In step S515, the first CPE 11 may determine whether the first local communication interface 112 of the first CPE 11 is already connected to the first wireless communication interface 111 of the first CPE 11. If not, the first CPE 11 may continue to execute step S516 to switch the connection of the first local communication interface 112 of the first CPE 11 to the first wireless communication interface 111 of the first CPE 11.

On the other hand, if the first CPE 11 determines in step S515 that the first local communication interface 112 of the first CPE 11 is already connected to the first wireless communication interface 111 of the first CPE 11, it means that the first CPE 11 has connected the first local communication interface 112 to the first wireless communication interface 111 in response to the normal first wireless communication state. Therefore, the first CPE 11 may accordingly execute step S517 to maintain the connection of the first local communication interface 112 of the first CPE 11 to the first wireless communication interface 111 of the first CPE 11.

After step S516 and step S517, the first data D1 and/or the second data D2 of the application device 199 may be exchanged between the first CPE 11 and the base station 12. In other words, the first CPE 11 may transmit and receive data associated with the application device 199 through the first wireless communication interface 111, but the disclosure is not limited thereto. In this case, the first CPE 11 may return to step S511 to detect the first wireless communication state again.

The mechanism illustrated in FIG. 5 can prevent the first CPE 11 from performing unnecessary connection switch, thereby improving the operational efficiency.

In an embodiment of the disclosure, the first CPE 11 may be provided with a switching circuit, which may switch the connection of the first local communication interface 112 to the first wireless communication interface 111, or switch the connection of the first local communication interface 112 to the second local communication interface 113, according to the first wireless communication state, but the disclosure is not limited thereto.

In an embodiment, in response to determining that the first wireless communication state is abnormal, the first CPE 11 may enable the data of the application device 199 to be transmitted between the first local communication interface 112 and the second local communication interface 113 by other methods.

For example, a forwarding table of the first CPE 11 may be configured with an address (for example, media access control address) of the first backup communication device 31. In an embodiment, in response to determining that the first wireless communication state is abnormal, the first CPE 11 may set the ingress of the first local communication interface 112 and the egress of the second local communication interface 113 in the same first group, and set the egress of the first local communication interface 112 and the ingress of the second local communication interface 113 in the same second group. Thereby, the data of the application device 199 may be transmitted between the first local communication interface 112 and the second local communication interface 113.

In an embodiment where the first backup communication device 31 is the second CPE, the first backup communication device 31 may also be connected in series with other second backup communication devices. Thereby, in the case where the second wireless communication state of the first backup communication device 31 is abnormal, the data of the application device 199 may be further transmitted through other second backup communication devices.

For example, the second CPE may detect the second wireless communication state of the second CPE. In response to determining that the second wireless communication state becomes abnormal, the second CPE may execute at least one of the following operations: guiding the first data D1 from the first CPE 11 to the second backup communication device; and guiding the second data D2 from the second backup communication device to the first CPE 11.

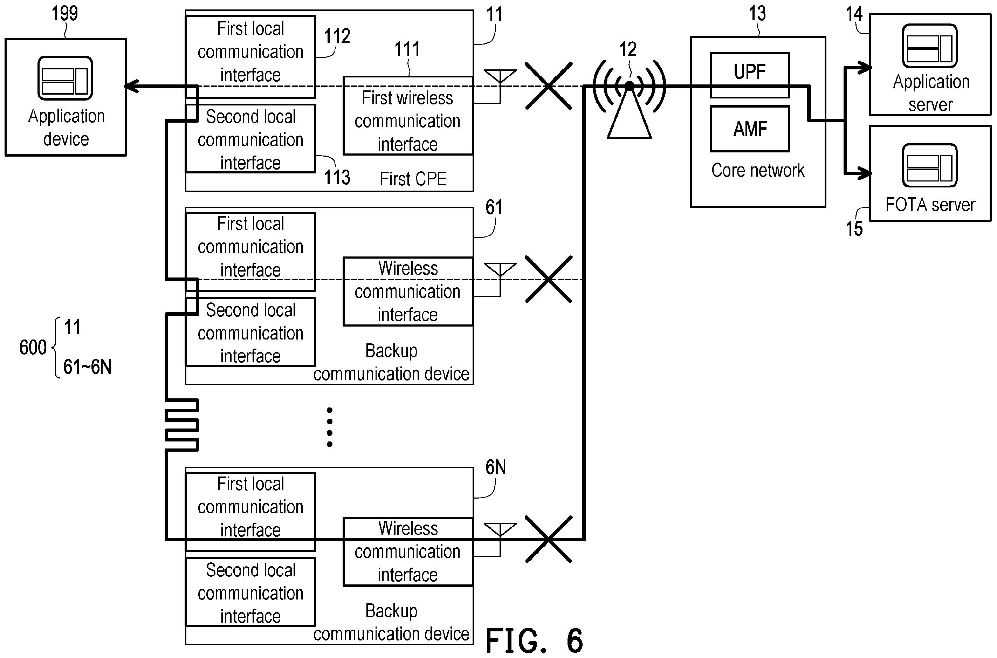

Referring to FIG. 6, FIG. 6 is an application scenario diagram according to an embodiment of the disclosure. In FIG. 6, a system 600 for maintaining data transmission continuity may include the first CPE 11. Furthermore, to maintain data transmission continuity, the system 600 may also include backup communication devices 61 to 6N (where N is a positive integer) connected in series sequentially to the first CPE 11.

In FIG. 6, each of the backup communication devices 61 to 6N may have the same structure and operating mechanism as the first backup communication device 31 in FIG. 3. Additionally, the connection between the first CPE 11 and the backup communication devices 61 to 6N may be as shown in FIG. 6, and the relevant details may be found in the description of the connection between the first CPE 11 and the first backup communication device 31 in the previous embodiments, which will not be repeated here.

With the method according to the embodiments of the disclosure, even if none of the first CPE 11 and the backup communication device before the backup communication devices 61 to 6N is able to exchange data normally with the base station 12, the data of the application device 199 can still be exchanged with the base station 12 through the backup communication device 6N, thereby maintaining the data transmission continuity.

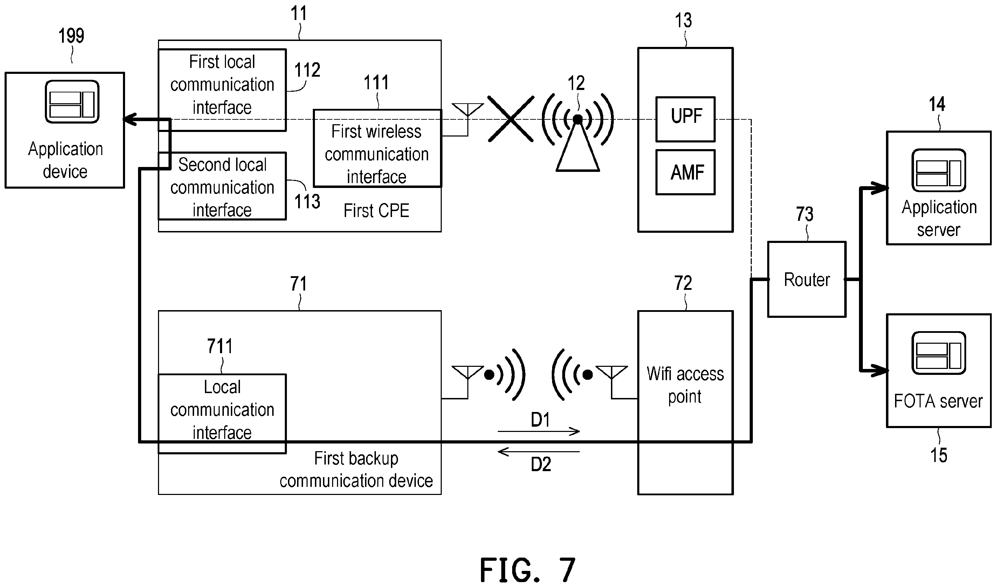

Referring to FIG. 7, FIG. 7 is an application scenario diagram according to an embodiment of the disclosure.

In FIG. 7, in the case where the first wireless communication state is normal, the first wireless communication interface 111 of the first CPE 11 may use the first wireless communication protocol to exchange data with the base station 12.

In this embodiment, in the case where the first wireless communication state is abnormal, the first CPE 11 may switch the connection of the first local communication interface 112 to the second local communication interface 113 based on the teachings in the previous embodiments, wherein the second local communication interface 113 may be connected to a local communication interface 711 of a first backup communication device 71.

In this embodiment, the first backup communication device 71 may transmit the first data D1 from the first CPE 11 through a second wireless communication protocol, and receive the second data D2 through the second wireless communication protocol, wherein the second wireless communication protocol is different from the first wireless communication protocol.

For convenience, it is assumed below that the first wireless communication protocol is a 5G communication protocol, while the second wireless communication protocol is a Wifi communication protocol, but the disclosure is not limited thereto.

In this embodiment, in the case where the external communication entity that the first CPE 11 communicates with is a first external communication entity, the external communication entity that the first backup communication device 71 communicates with is, for example, a second external communication entity different from the first external communication entity.

In the case where the second wireless communication protocol is a Wifi communication protocol, the second external communication entity that communicates with the first backup communication device 71 may be, for example, a Wifi access point 72, but the disclosure is not limited thereto.

In the scenario of FIG. 7, the Wifi access point 72 may further exchange data related to the application device 199 with the application server 14 and the FOTA server 15 through a router 73.

As shown in FIG. 7, the first backup communication device 71 may use a wireless communication protocol different from the wireless communication protocol of the first CPE 11 to exchange data with other external communication entities. Thereby, the mechanism for maintaining data transmission continuity is more flexible.

In summary, in the case where the first CPE is unable to exchange data normally with the corresponding external communication entity, the method according to the embodiments of the disclosure may switch to exchange data of the application device with the external communication entity through the first backup communication device 31, thereby maintaining data transmission continuity.

## Claims

1. A method for maintaining data transmission continuity, comprising:
detecting, by first customer premise equipment (11), a first wireless communication state of the first customer premise equipment, wherein the first customer premise equipment serves an application device (199) (S210); and
in response to determining that the first wireless communication state is abnormal, executing, by the first customer premise equipment, at least one of following operations:
guiding first data from the application device to a first backup communication device (31); and
guiding second data from the first backup communication device to the application device (S220).

2. The method according to claim 1, wherein detecting, by the first customer premise equipment, the first wireless communication state of the first customer premise equipment comprises:
detecting a first non-access stratum notification; and
in response to determining that the first non-access stratum notification indicates an IPv4 disconnection notification, determining that the first wireless communication state is abnormal.

3. The method according to claim 2, further comprising:
in response to determining that the first non-access stratum notification does not indicate the IPv4 disconnection notification, determining whether the first non-access stratum notification indicates an IPv4 connection notification;
in response to determining that the first non-access stratum notification indicates the IPv4 connection notification, determining that the first wireless communication state is normal; and
in response to determining that the first non-access stratum notification does not indicate the IPv4 connection notification, detecting a second non-access stratum notification.

4. The method according to claim 1, wherein detecting, by the first customer premise equipment, the first wireless communication state of the first customer premise equipment comprises:
detecting a first radio resource control notification; and
in response to determining that the first radio resource control notification indicates an idle state notification, determining that the first wireless communication state is abnormal.

5. The method according to claim 4, further comprising:
in response to determining that the first radio resource control notification does not indicate the idle state notification, determining whether the first radio resource control notification indicates a connection state notification;
in response to determining that the first radio resource control notification indicates the connection state notification, determining that the first wireless communication state is normal; and
in response to determining that the first radio resource control notification does not indicate the connection state notification, detecting a second radio resource control notification.

6. The method according to claim 1, wherein guiding, by the first customer premise equipment, the first data from the application device to the first backup communication device comprises:
directly guiding, by the first customer premise equipment, the first data from the application device to the first backup communication device without handshaking with the first backup communication device.

7. The method according to claim 1, wherein the first customer premise equipment is connected to the application device through a first local communication interface (112) of the first customer premise equipment, and in response to determining that the first wireless communication state is abnormal, the method further comprises:
determining whether the first local communication interface of the first customer premise equipment is already connected to a second local communication interface (113) of the first customer premise equipment, wherein the second local communication interface of the first customer premise equipment is connected to the first backup communication device; and
in response to determining that the first local communication interface of the first customer premise equipment is not connected to the second local communication interface of the first customer premise equipment, switching, by the first customer premise equipment, connection of the first local communication interface of the first customer premise equipment to the second local communication interface of the first customer premise equipment.

8. The method according to claim 7, further comprising:
in response to determining that the first local communication interface of the first customer premise equipment is already connected to the second local communication interface of the first customer premise equipment, maintaining connection of the first local communication interface of the first customer premise equipment to the second local communication interface of the first customer premise equipment.

9. The method according to claim 8, further comprising:
in response to determining that the first wireless communication state becomes normal, switching, by the first customer premise equipment, connection of the first local communication interface of the first customer premise equipment to a first wireless communication interface (111) of the first customer premise equipment; and
transmitting and receiving, by the first customer premise equipment, data associated with the application device through the first wireless communication interface of the first customer premise equipment.

10. The method according to claim 1, wherein the first backup communication device comprises second customer premise equipment, and a second wireless communication state of the second customer premise equipment is normal.

11. The method according to claim 10, further comprising:
detecting, by the second customer premise equipment, the second wireless communication state of the second customer premise equipment; and
in response to determining that the second wireless communication state becomes abnormal, executing, by the second customer premise equipment, at least one of following operations:
guiding the first data from the first customer premise equipment to a second backup communication device; and
guiding the second data from the second backup communication device to the first customer premise equipment.

12. The method according to claim 1, wherein the first customer premise equipment is connected to the application device through a first local communication interface of the first customer premise equipment, and the method further comprises:
in response to determining that the first wireless communication state is normal, transmitting and receiving, by the first customer premise equipment, data associated with the application device through a first wireless communication interface of the first customer premise equipment, wherein the first wireless communication interface is connected to the first local communication interface.

13. The method according to claim 12, wherein the first wireless communication interface uses a first wireless communication protocol, and the method further comprises:
transmitting, by the first backup communication device, the first data from the first customer premise equipment through a second wireless communication protocol; and
receiving, by the first backup communication device, the second data through the second wireless communication protocol.

14. A system (600) for maintaining data transmission continuity, comprising:
first customer premise equipment (11) configured to execute:
detecting a first wireless communication state of the first customer premise equipment, wherein the first customer premise equipment serves an application device (199); and
in response to determining that the first wireless communication state is abnormal, executing at least one of following operations:
guiding first data from the application device to a first backup communication device (71); and
guiding second data from the first backup communication device to the application device.
